Europäisches Patentamt

European Patent Office

Office européen des brevets

(11) Veröffentlichungsnummer : **0 041 102 B1**

# EUROPÄISCHE PATENTSCHRIFT

(45) Veröffentlichungstag der Patentschrift :
04.07.84

(21) Anmeldenummer : 81101682.3

(22) Anmeldetag : 07.03.81

(51) Int. Cl.³ : **F 02 P 5/04**

(54) **Zündanlage für Brennkraftmaschinen.**

(30) Priorität : 02.06.80 DE 3020868
06.12.80 DE 3046100

(43) Veröffentlichungstag der Anmeldung :
09.12.81 Patentblatt 81/49

(45) Bekanntmachung des Hinweises auf die Patenterteilung : 04.07.84 Patentblatt 84/27

(84) Benannte Vertragsstaaten :
DE FR GB

(56) Entgegenhaltungen :
EP-A- 0 045 903
DE-A- 2 619 443
GB-A- 2 021 690
US-A- 4 106 447

(73) Patentinhaber : ROBERT BOSCH GMBH
Postfach 50
D-7000 Stuttgart 1 (DE)

BAYERISCHE MOTOREN WERKE Aktiengesellschaft
Postfach 40 02 40
D-8000 München 40 (DE)

(72) Erfinder : Guggenmos, Johannes, Ing. grad.
Fabrikstrasse 6
D-8949 Dirlewang (DE)
Erfinder : Krappel, Alfred Elektro-Ing.
Elisabethweg 2
D-8045 Ismaning (DE)
Erfinder : Fritz, Adolf R., Ing.
Gebelsbergstrasse 96
D-7000 Stuttgart 1 (DE)
Erfinder : Gottschick, Michael, Dipl. Ing.
Taubenstrasse 15
D-7121 Freudental (DE)

(74) Vertreter : Vetter, Hans, Dr.-Ing.
Robert-Bosch-Platz 1
D-7016 Gerlingen-Schillerhöhe (DE)

## Beschreibung

### Stand der Technik

Die Erfindung geht aus von einer Zündanlage nach der Gattung des unabhängigen Anspruchs. Die Belastung eines induktiven Zündmarkengebers durch ein Impedanzglied zum Zwecke der Zündzeitpunktverschiebung ist aus der DE-A-2 619 443 bekannt. Dort wird ab einer bestimmten Drehzahlschwelle diese Zündzeitpunktverschiebung sprunghaft bewirkt. In vielen Fällen, z. B. bei Anspassung einer Zündverstellkennlinie an die Klopfgrenze, ist es jedoch wünschenswert, den Zündzeitpunkt durch Belastung des Gebersignals kontinuierlich zu verstellen und rückzuverstellen.

Weiterhin ist aus der GB-A-2 021 690 eine solche Zündanlage bekannt, bei der ebenfalls zwei Zeitglieder vorgesehen sind. Diese Anordnung hat jedoch den Zweck, ein durch Klopfsignale verstelltes Zündsignal ständig wieder auf den ursprünglichen Wert zurückzuführen, wenn keine Klopfsignale mehr vorliegen. Eine gezielte Zündzeitpunktverstellung in einem bestimmten Drehzahlbereich, die streng von der Drehzahl abhängig ist, kann durch diese Anordnung nicht erreicht werden.

Schließlich ist in der EP-A-0 045 903, die bezüglich der Ansprüche 1-7 eine spätere Priorität nennt, eine Zündanlage mit einer Zündzeitpunktverstellung durch parameterabhängige Geberbelastung beschrieben. Die Merkmale der Ansprüche 8-15, gegenüber welchen diese EP-A-0 045 903 eine frühere Priorität nennt, sind in Verbindung mit den Merkmalen des Anspruches 1 neu.

### Vorteile der Erfindung

Die erfindungsgemäße Zündanlage mit den kennzeichnenden Merkmalen des unabhängigen Anspruchs hat demgegenüber den Vorteil, daß sie diese kontinuierliche Verstellung und Rückverstellung des Zündzeitpunkts in einem oder in mehreren Drehzahlbereichen ermöglicht. Dadurch entstehen keine Momentensprünge der Brennkraftmaschine, wodurch ein Ruckeln verhindert wird. Die benötigten Zeiten können sehr genau und einfach abgeglichen werden, insbesondere einfacher als Schwellen mit Hysterese. Es können sehr komplexe Kennlinien erzeugt werden.

Durch die in den abhängigen Ansprüchen aufgeführten Maßnahmen sind vorteilhafte Weiterbildungen und Verbesserungen der im Hauptanspruch angegebenen Zündanlage möglich. Besonders vorteilhaft ist die Ausbildung der Zeitglieder als einziger digitaler Zähler. Durch Dekodierung von Zahlenbereichen kann praktisch eine beliebige Zahl von zueinander verzögerten, festen Zeiten erzeugt werden, die als Belastungssignale dienen.

Manche Zündanlagen, insbesondere Zündanlagen mit Schließwinkelregelung, weisen einen durch die positive Halbwelle der Geberspannung aufladbaren Regelkondensator auf. In Abhängigkeit der Kondensatorspannung wird drehzahlabhängig der Schaltpegel einer Schwellwertstufe verschoben. Dieses Prinzip würde bei Belastung der positiven Halbwelle des Zündmarkengebers zur Zündzeitpunktverschiebung nicht mehr funktionieren. Eine vorteilhafte Maßnahme zur Aufrechterhaltung der genannten Funktion ist die Steuerung eines auf- und entladbaren Speichers als Drehzahlgeber durch das weitere Zeitglied. Das in diesem Drehzahlgeber erzeugte Signal wird als Strom dem mit der genannten Schwellwertstufe verbundenen Anschluß des Zündmarkengebers zugeführt, so daß die Pegelverschiebung trotz Belastung des Gebersignals erhalten bleibt.

### Zeichnung

Zwei Ausführungsbeispiele der Erfindung sind in der Zeichnung dargestellt und in der nachfolgenden Beschreibung näher erläutert. Es zeigen

Figur 1 ein Schaltungsbeispiel einer analogen Ausführungsform,

Figur 2 ein Signaldiagramm zur Erläuterung der Notwendigkeit einer Zündzeitpunktverschiebung,

Figur 3 und 4 Signaldiagramme zur Erläuterung der Wirkungsweise der Zündzeitpunktverschiebung durch Geberbelastung bei verschiedenen Drehzahlen,

Figur 5 ein Schaltungsbeispiel einer digitalen Ausführungform,

Figur 6 ein Schaltungsbeispiel für einen Lastgeber,

Figur 7 ein Signaldiagramm zur Erläuterung der Wirkungsweise des Lastgebers und

Figur 8 ein Schaltungsbeispiel für einen Drehzahlschalter.

### Beschreibung der Ausführungsbeispiele

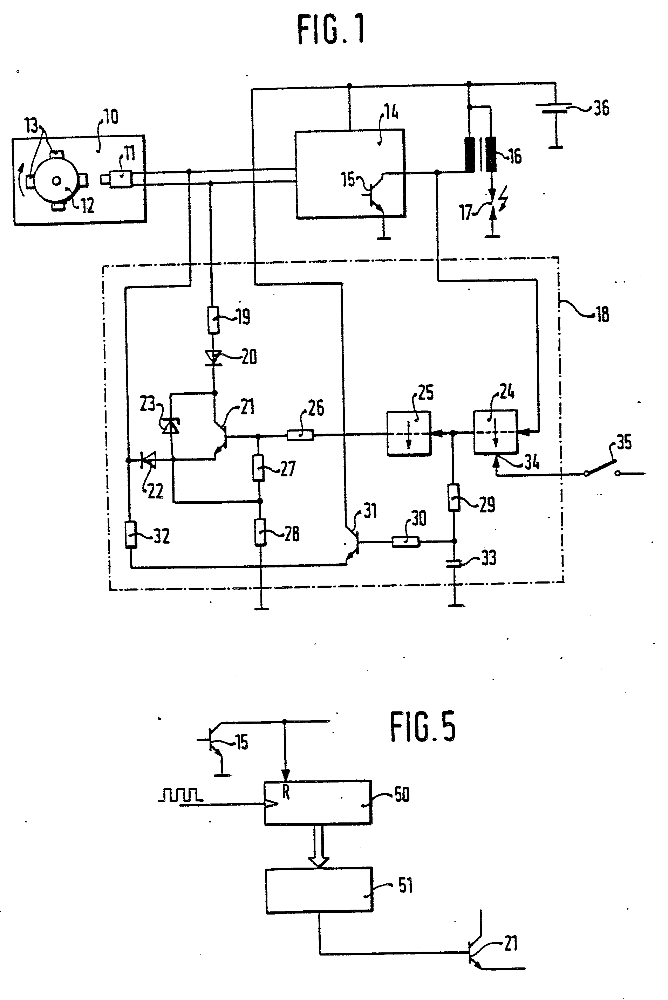

In dem in Figur 1 dargestellten ersten Ausführungsbeispiel ist ein Zündmarkengeber 10 dargestellt, der aus einem induktiven Aufnehmer 11 sowie aus einem rotierenden, insbesondere mit der Kurbelwelle oder Nockenwelle einer Brennkraftmaschine verbundenen Teil 12 besteht, das vier Zündmarken 13, bzw. vier Winkelsegmente aufweist. Die beiden Ausgänge des Aufnehmers 11 sind mit einer elektronischen Zündschaltung 14 verbunden, wie sie z. B. aus der DE-C-2 124 310, der DE-C-2 549 586 oder der DE-A-2 833 343 bekannt ist. Solche Zündschaltungen dienen der Signalaufbereitung der Gebersignale und weisen üblicherweise eine Schließwinkelsteuerung bzw. -Regelung auf. Ihr Endstufentransistor 15 steuert den Stromfluß durch die Primärwicklung einer Zündspule 16, in deren Sekundärstromkreis wenigstens eine Zündkerze 17 geschaltet ist. Bei mehreren Zündkerzen kann in bekannter Weise eine mechanische oder nicht-mechanische Hochspannungsverteilung vorgesehen sein. Zur Veränderung des Zündzeitpunkts in Abhängigkeit von Parametern der Brennkraftmaschine, wenigstens jedoch des Parameters Drehzahl, ist üblicherweise in der Geberanordnung 10 eine in Fig. 1 nicht näher dargestellte mechanische Fliehkraftverstellung oder in der Zündschaltung 14 eine elektronische Zündverstelleinrichtung vorgesehen.

Die beiden Ausgänge der Geberanordnung 10 sind weiterhin mit einer Schaltung 18 zur Steuerung der Geberbelastung verbunden. Ein Anschluß des Aufnehmers 11 ist über einen Belastungswiderstand 19 und eine in Reihe dazu geschaltete Diode 20 mit dem Kollektor eines Transistors 21 verbunden, dessen Emitter über eine weitere Diode 22 mit dem zweiten Anschluß des Aufnehmers 11 verbunden ist. Parallel zur Emitter-Kollektor-Strecke des Transistors 21 ist eine Z-Schutzdiode 23 geschaltet. Der Kollektor des Endstufentransistors 15 ist mit dem Triggereingang eines ersten Zeitglieds 24 verbunden, dessen Ausgang über ein weiteres Zeitglied 25 und einen dazu in Reihe geschalteten Widerstand 26 an die Basis des Transitors 21 angeschlossen ist. Diese Basis ist weiterhin über einen aus zwei Widerständen 27, 28 bestehenden Spannungsteiler an Masse gelegt. Ein Abgriff dieses Spannungsteilers 27, 28 ist mit dem Emitter des Transistors 21 verbunden.

Der Verknüpfungspunkt zwischen den beiden Zeitgliedern 24, 25 ist über die Reihenschaltung zweier Widerstände 29, 30 mit der Basis eines weiteren Transistors 31 verbunden, dessen Emitter über einen Widerstand 32 mit dem Verknüpfungspunkt zwischen der Diode 22 und dem Aufnehmer 11 verbunden ist. Der Verknüpfungspunkt zwischen den beiden Widerständen 29, 30 ist über einen Kondensator 33 an Masse gelegt. Eine Versorungsbatterie 36 bewirkt die notwendige Stromversorgung für die Zündspule 16, die Zündschaltung 14, den Kollektor des Transistors 31 sowie in nicht näher dargestellter Weise noch andere Bauelemente, wie z. B. die Zeitglieder.

Das als retriggerbares Zeitglied 24 ausgebildete Zeitglied weist einen Sperreingang 34 auf zur Sperrung eines eventuell durch ein Triggersignals erzeugten Ausgangssignals. Dieser Sperreingang 34 ist mit einem Schalter 35 verbunden, der in Abhängigkeit eines bestimmten Belastungszustands des Motors schaltet. Dieser Schalter 35 kann z. B. ein Drosselklappenschalter sein. Die beiden Zeitglieder 24, 25 können vorteilhaft durch den integrierten Schaltkreis MC 14538 (Motorola) realisiert werden.

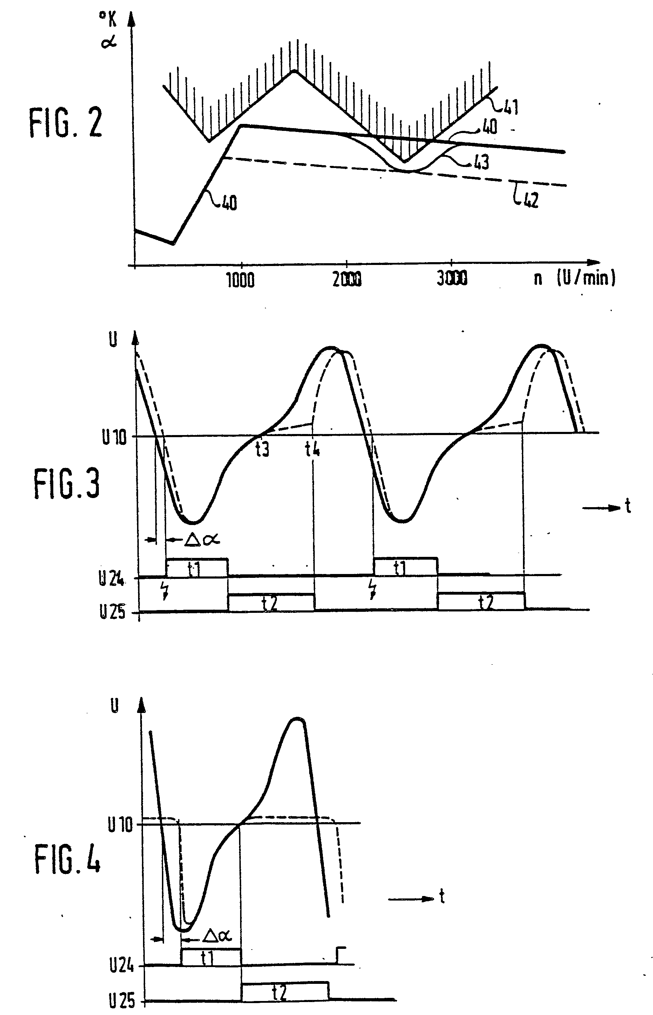

Induktive Geber weisen eine Eigenverstellung auf, die durch die Ankerrückwirkung (Belastung) hervorgerufen wird. Dieser Effekt wird durch die Schaltung 18 und z. B. auch durch den eingangs angegebenen Stand der Technik gezielt zur Verstellung des Zündzeitpunkts ausgenutzt. In Fig. 2 ist eine einfache Zündverstellkennlinie 40 dargestellt, wie sie z. B. durch einen einfachen, mechanischen Fliehkraftversteller erzeugt wird. Eine solche Zündverstellkennlinie beschreibt die Abhängigkeit des Zündverstellwinkels $\alpha$ von der Drehzahl n. Der leichte Rückgang des Zündverstellwinkels $\alpha$ oberhalb der Drehzahl 1 000 U/min bei Erhöhung der Drehzahl ist durch die natürliche Ankerrückwirkung bedingt. Die Linie 41 zeigt die experimentell oder theoretisch ermittelte Klopfgrenze einer bestimmten Brennkraftmaschine. Da diese Klopfgrenze die Zündverstellkennlinie 40 schneidet, würde im dargestellten Fall zwischen den Drehzahlen 2 300 und 2 800 U/min ein Klopfen auftreten. Mit den üblichen Fliehkraftverstellungen und einfachen elektronischen Zündverstelleinrichtungen müßte der gesamte Abschnitt oberhalb 1 000 Umdrehungen nach « spät » zurückgenommen werden. Dies zeigt die unterbrochene Linie 42. Eine nicht geringe Leistungseinbuße wäre darüber hinaus mit einer solchen Rücknahme verbunden. Durch die Schaltung 18 ist eine Zündverstellung nach « spät » gezielt in einem schmalen Bereich möglich. Dies zeigt die Kurve 43. Eine Leistungseinbuße und Verringerung des Wirkungsgrads über den gesamten Bereich kann dadurch verhindert werden.

In Fig. 3 ist der Spannungsverlauf (U10, durchgezogene Linie) der induktiven Geberanordnung 10 über der Zeit dargestellt. Beim Nulldurchgang von + nach − erfolgt die Zündung. Dies bewirkt üblicherweise ein Komparator in der elektronischen Zündschaltung 14. Mit dem Zündimpuls wird das erste Zeitglied 24 getriggert, wodurch eine Signalfolge U24 erzeugt wird. Die Haltezeit des ersten Zeitglieds 24 beträgt t1. Mit der Rückflanke eines Signals U24 wird das zweite Zeitglied 25 getriggert, das eine Haltezeit t2 aufweist. Es entsteht die Signalfolge U25. Fig. 3 zeigt ungefähr die Verhältnisse bei einer Drehzahl von 2 400 U/min. Während eines Signals U25 wird über den Widerstand 26 der Transistor 21 in den stromleitenden Zustand gesteuert und belastet die Geberspannung über den Widerstand 19, sofern eine positive Halbwelle vorliegt. Bei negativen Halbwellen sperrt z. B. die Diode 20. Somit tritt erst ab dem Zeitpunkt t3 eine Belastung der Geberspannung und damit eine Auswirkung auf den Zündzeitpunkt auf. Die unterbrochen dargestellte Linie zeigt den Verlauf der Geberspannung bei Belastung. Bis zum Zeitpunkt t4, also bis zum Ende eines Signals U25, ist diese Belastung wirksam, so daß nur ein geringer Spannungsanstieg der Geberspannung zu verzeichnen ist. Nach der Belastung nähert sich die Geberspannung wieder rasch dem ursprünglichen Wert an. Der Nulldurchgang erfolgt jedoch noch um den Winkel $\Delta \alpha$ nach « spät » verschoben, so daß sich der Zündzeitpunkt entsprechend verschiebt.

Durch die Zeitglieder 24 und 25 wird eingestellt, ab wann die Belastung beginnen soll, und mit dem Zeitglied 25 wird eingestellt, wielange die Belastung dauern soll. Den Grad der Belastung bestimmt die Dimensionierung des Widerstands 19. Dadurch kann in beliebigen Drehzahlbereichen der Zündzeitpunkt in bestimmten Grenzen beliebig verändert werden.

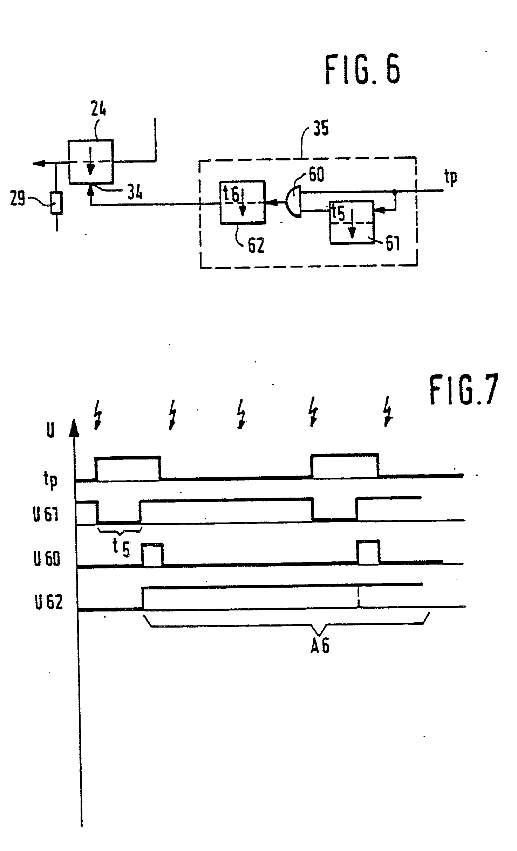

Im dargestellten Beispiel müssen die Zeiten t1 und t2 so gewählt werden, daß erst bei einer Drehzahl von 2 000 U/min die Rückflanke eines Signals U25 den Zeitpunkt t3 erreicht. Erst ab dieser Drehzahl beginnt dann die Zündzeitpunktverstellung. Etwa bis zur Drehzahl 2 600 U/min wandert der Bereich t2 immer weiter in die positive Halbwelle hinein, bis schließlich die gesamte Halbwelle von t2 umfaßt wird. Diese Verhältnisse sind in Fig. 4 dargestellt. Nunmehr ist die gesamte positive Halbwelle belastet, was zu einer größtmöglichen Zündzeitpunktverschiebung führt. Wird die Drehzahl nun weiter erhöht, so entsteht ein wachsender Bereich zu Beginn der positiven Halbwelle, in dem keine Belastung stattfindet, da jetzt der Bereich t1 sowohl die negative Halbwelle wie auch einen wachsenden Teil der positiven Halblwelle umfaßt. Die Verstellung Δα geht wieder zurück, bis keine Überlappung von t2 und der positiven Halbwelle mehr stattfindet. Zu diesem Zeitpunkt wird die Haltezeit des Zeitglieds 24 größer als der Zündabstand, so daß das Zeitglied 25 nicht mehr getriggert wird.

Die Diode 22 dient als Schutzdiode für den Transistor 21 gegen positive Geberspannungen an diesem Punkt. Durch den Spannungsteiler 27, 28 wird ein Basisstrom zum Aufnehmer 11 verhindert, der in der Zündschaltung 14 eine Pegelverschiebung bei Anliegen der negativen Halbwelle bewirken würde.

Gemäß dem angegebenen Stand der Technik zur elektronischen Zündschaltung 14 wird dort üblicherweise ein Kondensator während einer positiven Halbwelle der Geberspannung aufgeladen und während der negativen Halbwelle wieder um einen bestimmten Betrag entladen. Es wird somit eine drehzahlabhängige Spannung erzeugt, die den Schließwinkel drehzahlabhängig beeinflußt. Durch einen mit der Geberspannung verbundenen Komparator werden die Schaltschwellen festgelegt. Eine Rückkopplung der Kondensatorspannung auf einen Komparatoreingang beeinflußt drehzahlabhängig diese Schaltschwellen. Eine Verwendung der Schaltung gemäß Fig. 1 auf eine Zündschaltung 14 gemäß der DE-C-2 549 586 ist unproblematisch, da dort der erwähnte Kondensator über die Versorgungsspannung geladen wird. Bei Anwendung auf eine Zündschaltung 14 gemäß der DE-C-2 124 310 oder der DE-A-2 833 343 entstehen jedoch dadurch Probleme, daß dort die Aufladung dieses Kondensators durch die Geberspannung selbst erfolgt. Bei Belastung der Geberspannung durch den Widerstand 19 kann somit der Kondensator nicht mehr ausreichend geladen werden, so daß eine unerwünschte Pegelverschiebung erfolgen würde. Dies verhindert die Schaltung 29 bis 33. Über den Widerstand 29 wird der Kondensator 33 während der Zeit t1 geladen, so daß dort eine drehzahlabhängige Spannung gewonnen wird. Diese drehzahlabhängige Spannung wird über den Widerstand 30, den Transistor 31 und dem Widerstand 32 auf einen Geberanschluß eingekoppelt, so daß trotz Belastung der Geberspannung die beschriebenen, unerwünschten Effekte nicht eintreten : Es erfolgt keine unerwünschte Pegelverschiebung und keine unerwünschte Verringerung des Schließwinkels. Der Transistor 31 ist als Emitterfolger geschaltet und erzeugt einen Strom über den Widerstand 32, der in Abhängigkeit der Spannung am Kondensator 33 ist. Der Begrenzungswiderstand 30 sorgt dafür, daß der Kondensator 33 nicht vollständig entladen wird, wenn der mit dem Widerstand 32 verbundene Anschluß des Aufnehmers 11 stark negativ wird.

Das in Fig. 5 dargestellte, zweite Ausführungsbeispiel zeigt eine digitale Realisierung der Zeitglieder 24, 25, sowie eventuell benötigter weiterer Zeitglieder. Der Kollektor des Transistors 15 ist mit dem Rücksetzeingang R eines digitalen Zählers 50 verbunden, dem eine Zähltaktfrequenz zugeführt ist. Die Zahlenausgänge dieses Zählers 50 sind mit einer Dekodierstufe 51 verbunden, die z. B. eine logische Gatteranordnung sein kann. Der Ausgang der Dekodierstufe 51 ist mit der Basis des Transistors 21 verbunden.

Mit jedem Zündimpuls wird der Zähler 50 rückgesetzt und beginnt erneut aufwärts zu zählen. Die Dekodierstufe 51 ist so eingestellt daß ab einem nach der Zeit t1 erreichten Zahlenwert diese Dekodierstufe 51 ein Ausgangssignal abgibt, das solange andauert, bis nach einer weiteren Zeitspanne t2 ein weiterer Zahlenwert erreicht ist, bei dessen Erreichen die Dekodierstufe 51 ihren Ausgang wieder sperrt. Dadurch wird wie bei Fig. 1 der Transistor 21 während der Zeit t2 angesteuert. Der große Vorteil der in Fig. 5 dargestellten Schaltung besteht darin, daß durch die Dekodierstufe 51 weitere Zahlenintervalle und damit Zeitintervalle dekodiert werden können, so daß eine praktisch beliebige Zahl von Zeitgliedern und Zeiten durch einen einzigen Zähler 50 und eine einzige Dekodierstufe 51 realisiert werden können. Es können daher zu verschiedenen Zeiten verschieden lange Ausgangssignale und damit Steuersignale für den Transistor 21 erzeugt werden, wodurch der Geber zu verschiedenen Zeiten verschieden lang belastet werden kann. Eine sehr exakte Anpassung an die Klopfgrenze wird dadurch ermöglicht, insbesondere dann, wenn mehrere Bereiche der Klopfgrenze in eine einfache (z. B. lineare) Zündverstellkennlinie hineinragen. Soll die Belastung während der verschiedenen Drehzahlbereiche unterschiedlich erfolgen, so kann die Anordnung 19, 20, 21 mehrfach mit verschiedener Dimensionierung des Widerstands 19 ausgeführt werden, wobei in Abhängigkeit der dekodierten Zeit, bzw. des dekodierten Zahlenbereichs diese verschiedenen Schaltzweige durch die Dekodierstufe 21 angesteuert werden.

Wie Figur 1 zeigt, kann die Schaltung 18 sehr einfach auch nachträglich noch an eine vorhandene Zündanlage angeschlossen werden, z. B. zur nachträglichen Anpassung an eine Klopfgrenze oder zur Anpassung der gleichen Zündanlage an verschiedene Brennkraftmaschinen mit unterschiedlicher Klopfgrenze. Ebensogut kann die Schaltung 18 natürlich auch in der elektronischen Zündschaltung 14 integriert sein.

In Figur 6 ist ein Schaltungsbeispiel für den als Lastschalter wirkenden Schalter 35 dargestellt, das bei einer Brennkraftmaschine mit elektronischer Kraftstoffeinspritzung vorteilhaft Verwendung finden kann. Das Kraftstoffeinspritzsignal tp ist dabei sowohl einem UND-Gatter 60, wie auch dem Triggereingang eines Zeitglieds 61 mit der Zeitkonstanten t5 zugeführt. Der Ausgang dieses Zeitglieds 61 ist einem weiteren Eingang des UND-Gatters 60 zugeführt. Der Ausgang des UND-Gatters 60 ist über ein weiteres Zeitglied 62 mit der Zeitkonstanten t6 mit dem Sperreingang 34 des Zeitglieds 24 verbunden.

Die Wirkungsweise des in Figur 6 dargestellten Schaltungsbeispiels wird im folgenden anhand des in Figur 7 dargestellten Signaldiagramms erläutert. Das Kraftstoffeinspritzsignal tp, dessen Länge ein Maß für den Lastzustand der Brennkraftmaschine ist, wird in der Anordnung 60, 61 mit der Länge t5 des Ausgangssignals des Zeitglieds 61 verglichen. Das UND-Gatter 60 gibt nur dann ein Ausgangssignal U60 ab, wenn die Signallänge von tp größer ist als t5. Diese Anordnung wirkt somit als Schwellwertstufe mit dem Schwellwert t5 bzw. mit einem dieser Signallänge entsprechenden Lastzustand. Die Signalfolge U60 wird dem retriggerbaren Zeitglied 62 zugeführt, dessen Haltezeit so bemessen ist, daß es bei regelmäßigem Auftreten von Signalen U60 immer im erregten Zustand verbleibt. Da gewöhnlich das Einspritzsignal nach jedem dritten Zündvorgang erfolgt, muß demnach die Zeit t6 größer sein als der maximal mögliche Abstand dreier Zündsignale. Dies natürlich nur in dem Bereich, in dem das Signal tp länger ist als t5. Die Triggerung des Zeitglieds 62 durch das zweite Signal U60 ist als durchbrochene Linie dargestellt. Durch das Ausgangssignal U62 des Zeitglieds 62 wird der Sperreingang 34 des Zeitglieds 24 so gesteuert, daß die Sperrung aufgehoben wird. Dadurch wird die Zündzeitpunktverstellung durch Geberbelastung nur dann wirksam, wenn der Lastzustand eine Größe erreicht, bei der das Signal tp länger wird als t5.

Anstelle der Einschaltung der Zündzeitpunktverstellung durch Geberbelastung ab einem bestimmten Lastzustand kann dieses Einschalten natürlich auch bei steigender Last kontinuierlich erfolgen. Dies könnte z. B. dadurch erfolgen, daß der Lastzustand zu einer analogen Größe verarbeitet wird, durch die die Haltezeit des Zeitglieds 24 beeinflußbar bzw. steuerbar ist.

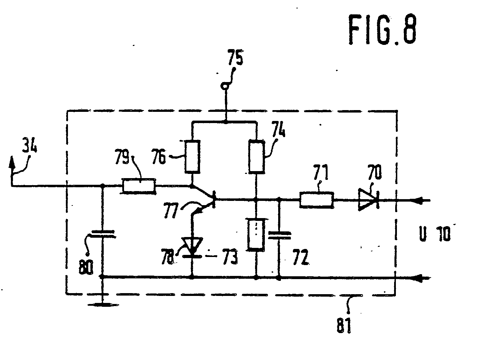

In Figur 8 ist ein Schaltungsbeispiel für einen Drehzahlschalter dargestellt, der bewirken soll, daß die Zündzeitpunktverstellung durch Geberbelastung nur bei laufender Brennkraftmaschine, also oberhalb einer bestimmten Drehzahl eingeschaltet ist. Diese Maßnahme verhindert den Nachteil, daß bei eingeschalteter Verstellung beim Abbremsen der Brennkraftmaschine bis zum Stillstand ein Hochschwingen der Zündspannung möglich wäre. Dies würde zu erheblichen Bauteilebelastungen, insbesondere von Isolationsschichten führen.

Die Geberspannung U10 ist an eine Reihenschaltung einer Diode 70 mit einem Widerstand 71 und einem Kondensator 72 gelegt. Parallel zum Kondensator 72 ist ein Entladewiderstand 73 geschaltet. Dieser Widerstand 73 bildet zusammen mit einem Widerstand 74 einen zwischen Masse und eine positive Versorgungsspannungsklemme 75 geschalteten Spannungsteiler. Die positive Versorgungsspannungsquelle ist dabei vorzugsweise stabilisiert. Parallel zu dem Spannungsteiler 74, 73 ist die Reihenschaltung eines Widerstands 76 mit der Kollektor-Emitter-Strecke eines Transistors 77 und mit einer Diode 78 geschaltet. Die Basis des Transistors 77 ist dabei an den Abgriff des Spannungsteilers 74, 73 angeschlossen. Der Kollektor des Transistors 77 ist über einen Widerstand 79 mit dem Sperreingang 34 des Zeitglieds 24 verbunden. Dieser Sperreingang 34 ist über einen Glättungskondensator 80 an Masse angeschlossen. Die beschriebene Schaltung 70 bis 80 bildet einen Drehzahlschalter 81.

Die Wirkungsweise der in Figur 8 dargestellten Schaltungsanordnung besteht darin, daß die Geberspannung U10 der als Integrierstufe wirkenden Anordnung 71 bis 73 zugeführt ist. Dabei bewirkt die Diode 70, daß nur negative Halbwellen der Geberspannung berücksichtigt werden. Prinzipiell könnten natürlich auch nur positive Halbwellen berücksichtigt werden. Ist die Diode 70 leitend, so wird der Kondensator 72 über den Widerstand 71 aufgeladen. Während der darauffolgenden positiven Halbwelle sperrt die Diode 70, und der Kondensator 72 wird über den Widerstand 73 entladen. Wenn bei stillstehendem Motor keine Geberspannung anliegt, so liegt an der Basis des Transistors 77 infolge des Spannungsteilers 74, 73 eine positive Spannung an, so daß der Transistor 77 leitet. Die am Sperreingang 34 liegende Ausgangsspannung des Drehzahlschalters liegt dadurch auf Null-Pegel. Mit steigenden Drehzahlen wird der Kondensator 72 negativ aufgeladen, wodurch die Spannung an der Basis des Transistors 77 abnimmt. Dieser geht dadurch kontinuierlich in den Sperrzustand über. In Abhängigkeit des Ansprechpegels des Zeitglieds 24 ist dadurch bis zu einer Drehzahl n1 von z. B. 1 000 U/min die Spätverstellung nicht eingeschaltet, und ab einer weiteren Drehzahlschwelle n2 von z. B. 1 200 U/min ist die Spätverstellung sicher eingeschaltet. Dies liegt an der Hysterese der Ansprechschwellen von Schaltungen, insbesondere von integrierten Schaltungen. Zur Glättung der Ausgangssteuerspannung dient die RC-Kombination 79, 80. Die Diode 78 dient zum Schutz der Basis-Emitter-Strecke des Transistors 77.

Wird die Schaltung gemäß Figur 8 in Kombination mit einem Lastschalter 35 verwendet, so können beide Potentiale z. B. über eine UND-Verknüpfung dem Sperreingang 34 zugeführt werden. Dies bedeutet dann, daß die Spätverstellung nur dann eingeschaltet wird, wenn gleichzeitig eine bestimmte Last vorliegt und eine bestimmte Drehzahl überschritten ist.

## Ansprüche

1. Zündanlage für Brennkraftmaschinen mit einem induktiven Zündmarkengeber (10) zur Steuerung eines elektronischen Schalters (15) im Primärstromkreis einer Zündspule (16) und mit Schaltmitteln zur Zündzeitpunktverschiebung durch Belastung des Geberausgangs, wobei ein Zeitglied (25) zur Beeinflussung der Schaltmittel vorgesehen ist, das in Abhängigkeit eines weiteren Zeitglieds arbeitet, dadurch gekennzeichnet, daß während des Ausgangssignals des ersten Zeitglieds (25 bzw. 50, 51) ein Steuersignal für die Schaltmittel (19, 20, 21) erzeugt wird, das durch das weitere Zeitglied (24 bzw. 50, 51) gegenüber einer periodischen Marke verschoben ist, und daß nur eine Halbwelle der Gebersignale belastbar ist.

2. Zündanlage nach Anspruch 1, dadurch gekennzeichnet, daß als Zeitglieder ein digitaler Zähler (50) vorgesehen ist, dem eine Dekodierstufe (51) nachgeschaltet ist, und der durch die periodische Marke jeweils auf einen festen Wert gesetzt wird.

3. Zündanlage nach Anspruch 1 oder 2, dadurch gekennzeichnet, daß zur Belastung nur einer Halbwelle der Gebersignale im Belastungszweig (19, 20, 21) ein Gleichrichterelement (20) geschaltet ist.

4. Zündanlage mit einer dem Geber nachgeschalteten Schwellwertstufe mit drehzahlabhängiger Schaltpegelverschiebung nach einem der vorhergehenden Ansprüche, dadurch gekennzeichnet, daß ein durch das weitere Zeitglied (24 bzw. 50, 51) gesteuertes auf- und entladbares Speicherglied (33) als Drehzahlspeicher vorgesehen ist, der mit einer Ausgangsklemme des Zündmarkengebers (10) verbunden ist.

5. Zündanlage nach Anspruch 4, dadurch gekennzeichnet, daß der Ausgangswert des Drehzahlspeichers (33) über einen Wandler (31, 32) in einen Stromwert gewandelt und der Ausgangsklemme des Zündmarkengebers (10) zugeführt wird.

6. Zündanlage nach Anspruch 5, dadurch gekennzeichnet, daß dem Wandler (31, 32) ein Strombegrenzungswiederstand (30) vorgeschaltet ist.

7. Zündanlage nach einem der vorhergehenden Ansprüche, dadurch gekennzeichnet, daß die Erzeugung des Steuersignals für die Schaltmittel (19, 20, 21) zur Belastung des Zündmarkengeberausgangs durch ein in Abhängigkeit der Last der Brennkraftmaschine stehendes Signal (35) steuerbar ist.

8. Zündanlage nach Anspruch 7, dadurch gekennzeichnet, daß die Last der Brennkraftmaschine durch einen Lastschalter (35) erfaßt wird, durch den die Schaltmittel (19, 20, 21) einschaltbar sind.

9. Zündanlage mit einer elektronischen Kraftstoffeinspritzanlage nach Anspruch 8, dadurch gekennzeichnet, daß als Lastschalter (35) eine Schwellwertstufe (60 bis 62) vorgesehen ist, die bei Überschreitung einer vorgebbaren Signallänge (t5) durch die Kraftstoffeinspritzsignale die Schaltmittel (19, 20, 21) einschaltet.

10. Zündanlage nach Anspruch 9, dadurch gekennzeichnet, daß als Schwellwertstufe eine Differenzschaltung (60, 61) zur Bildung der Differenz der Kraftstoffeinspritzsignallängen und der vorgebbaren Signallänge (t5) vorgesehen ist, durch die ein retriggerbares Zeitglied (62) triggerbar ist.

11. Zündanlage nach Anspruch 10, dadurch gekennzeichnet, daß die differenzschaltung aus einem invertierenden Zeitglied (61) besteht, dessen Ausgangssignal sowie dessen Triggersignal einem UND-Glied (60) zugeführt sind.

12. Zündanlage nach einem der vorhergehenden Ansprüche, dadurch gekennzeichnet, daß die Erzeugung des Steuersignals für die Schaltmittel (19, 20, 21) zur Belastung des Zündmarkengeberausgangs durch ein drehzahlabhängiges Signal steuerbar ist.

13. Zündanlage nach Anspruch 12, dadurch gekennzeichnet, daß ein Drehzahlschalter (81) zur Erzeugung des drehzahlabhängigen Signals vorgesehen ist.

14. Zündanlage nach Anspruch 13, dadurch gekennzeichnet, daß der Drehzahlschalter (81) im wesentlichen aus einem Kondensator (72) mit einem Lade- und Entladeglied (71, 73) besteht, der von einer Halbwelle der Gebersignale (U10) beaufschlagt wird, wobei in Abhängigkeit der Kondensatorspannung die Schaltmittel (19, 20, 21) einschaltbar sind.

15. Zündanlage nach Anspruch 14, dadurch gekennzeichnet, daß die Schaltmittel über das Zeitglied (24) einschaltbar sind.

## Claims

1. Ignition system for internal combustion engines, this ignition system possessing an ignition-point transmitter (10) for controlling an electronic switch (15) in the primary circuit of an ignition coil (16), and possessing circuit devices which are designed to shift the ignition timing by applying a load to the output terminal of the transmitter, a time-function element (25) being provided for influencing these circuit devices, which is slaved to an additional time-function element, characterised in that a control signal for the circuit devices (19, 20, 21) is generated while the first time-function element (25 or 50, 51) is emitting its signal, which is delayed by the additional time-function element (24 or 50, 51) in relation to a regularly-recurring mark, and in that the load can be applied to only one half-wave of the transmitter signals.

2. Ignition system according to Claim 1, characterised in that, as time-function elements, a digital counter (50) is provided, followed by a series-connected decoding stage (51), the regularly-recurring mark repeatedly setting the digital counter (50) to a fixed value.

3. Ignition system according to Claim 1 or 2, characterised in that a rectifier element (20) is included in the circuit, in order to apply a load, in the loading arm (19, 20, 21), to only one half-wave of the transmitter signals.

4. Ignition system with a threshold stage which is connected after the transmitter and is capable of shifting its switching level as a function of engine speed, according to one of the preceding Claims, characterised in that a memory element (33) is provided as an engine-speed memory device which can be charged an discharged under the control of the additional time-function element (24 or 50, 51), and which is connected to an output terminal of the ignition-point transmitter (10).

5. Ignition system according to Claim 4, characterised in that the value output by the engine-speed memory element (33) is converted to a current value by means of a converter (31, 32) and is supplied to the output terminal of the ignition-point transmitter (10).

6. Ignition system according to Claim 5, characterised in that a current-limiting resistor (30) is connected in advance of the converter (31, 32).

7. Ignition system according to one of the preceding Claims, characterised in that the generation of the control signal for the circuit devices (19, 20, 21) which are designed to apply a load to the output terminal of the ignition-point transmitter can itself be controlled by means of a signal (35) which is applied as a function of the load on the internal combustion engine.

8. Ignition system according to Claim 7, characterised in that the load on the internal combustion engine is acquired through a load switch (35), by means of which the circuit devices (19, 20, 21) can be activated.

9. Ignition system with an electronic fuel-injection system, according to Claim 8, characterised in that a threshold (60 to 62) is provided as the load switch (35), this threshold stage (60 to 62) activating the circuit devices (19, 20, 21) in the event of the fuel-injection signals exceeding a presettable signal-length (t5).

10. Ignition system according to Claim 9, characterised in that a difference circuit (60, 61) is provided as the threshold stage for forming the difference between the lengths of the fuel-ignition signals and the presettable signal-length (t5), this difference circuit (60, 61) being capable of triggering a retriggerable time-function element (62).

11. Ignition system according to Claim 10, characterised in that the difference circuit comprises an inverting time-function element (61), the output signal from this time-function element (61) and the signal for triggering it both being supplied to an AND element (60).

12. Ignition system according to one of the preceding Claims, characterised in that the generation of the control signal for the circuit devices (19, 20, 21) which are designed to apply a load to the output terminal of the ignition-point transmitter can itself be controlled by a signal which is a function of engine speed.

13. Ignition system according to Claim 12, characterised in that an engine-speed switch (81) is provided for generating the signal which is a function of engine speed.

14. Ignition system according to Claim 13, characterised in that the engine-speed switch (81) essentially comprises a capacitor (72), with a charging and discharging unit (71, 73), one half-wave of the transmitter signals (V10) being applied to this capacitor (72), while the circuit devices (19, 20, 21) can be activated under the control of the capacitor voltage.

15. Ignition system according to Claim 14, characterised in that the circuit devices can be activated by means of the time-function element (24).

**Revendications**

1. Installation d'allumage pour moteurs à combustion interne, avec un émetteur de repères d'allumage (10) pour commander un commutateur électronique (15) dans le circuit de courant primaire d'une bobine d'allumage (16), et avec des moyens de commutation pour le décalage de l'instant d'allumage par charge de la sortie de l'émetteur, un organe temporisé (25) étant prévu pour influencer les moyens de commutation, organe fonctionnant sous la dépendance d'un autre organe temporisé, installation caractérisée en ce que pendant le signal de sortie du premier organe temporisé (25 ou bien 50, 51) un signal de commande est engendré pour les moyens de commutation (19, 20, 21), ce signal étant décalé par rapport à un repère périodique par l'autre organe temporisé (24 ou bien 50, 51), seule une demi-onde des signaux de l'émetteur étant susceptible d'être chargée.

2. Installation d'allumage selon la revendication 1, caractérisée en ce qu'il est prévu comme organe de temporisation un compteur numérique (50) à la suite duquel est branché un étage de décodage (51) et qui est positionné à une valeur fixe par le repère périodique.

3. Installation d'allumage selon la revendication 1 ou 2, caractérisée en ce que pour la charge d'une seule demi-onde des signaux d'émetteur, un élément redresseur (20) est branché sur la dérivation de charge (19, 20, 21).

4. Installation d'allumage avec un étage de valeur de seuil branché à la suite de l'émetteur et comportant un décalage de niveau de commutation en fonction de la vitesse de rotation, selon l'une des revendications précédentes, installation caractérisée en ce qu'il est prévu, en tant que mémoire de la vitesse de rotation, un organe de mémorisation (33) susceptible d'être chargé et déchargé et commandé par l'autre organe temporisé (24 ou bien 50, 51) cet organe de mémorisation étant relié à une borne de sortie de l'émetteur de repères d'allumage (10).

5. Installation d'allumage selon la revendication 4, caractérisée en ce que la valeur de sortie de la mémoire de vitesse de rotation (33) est convertie par l'intermédiaire d'un convertisseur (31, 32) en une valeur de courant et appliquée à la borne de sortie de l'émetteur de repères d'allumage (10).

6. Installation d'allumage selon la revendication 5, caractérisée en ce qu'une résistance de limitation du courant (30) est branchée en amont du convertisseur (31, 32).

7. Installation d'allumage selon l'une des revendications précédentes, caractérisée en ce que la génération du signal de commande pour les moyens de commutation (19, 20, 21) pour la charge de la sortie de l'émetteur de repères d'allumage, est susceptible d'être commandée par un signal (35) se trouvant sous la dépendance de la charge du moteur à combustion interne.

8. Installation d'allumage selon la revendication 7, caractérisée en ce que la charge du moteur à combustion interne est détectée par un commutateur de charge (35) grâce auquel les moyens de commutation (19, 20, 21) sont susceptibles d'être mis en circuit.

9. Installation d'allumage avec une installation électronique d'injection de carburant, selon la revendication 8, caractérisée en ce qu'il est prévu comme commutateur de charge (35) un étage à valeur de seuil (60 à 62), qui, lors du dépassement par les signaux d'injection de carburant d'une longueur de signal (t5) susceptible d'être prédéterminée, met en circuit les moyens de commutation (19, 20, 21).

10. Installation d'allumage selon la revendication 9, caractérisée en ce qu'il est prévu comme étage à valeur de seuil un circuit différentiel (60, 61) pour former la différence de la longueur du signal d'injection de carburant et de la longueur prédéterminée du signal (t5), circuit différentiel grâce auquel un organe temporisé susceptible d'être redéclenché (62) est susceptible d'être déclenché.

11. Installation d'allumage selon la revendication 10, caractérisée en ce que le circuit différentiel est constitué d'un organe temporisé inversant (61), dont le signal de sortie ainsi que le signal de déclenchement sont appliqués à une porte ET (60).

12. Installation d'allumage selon l'une des revendications précédentes, caractérisée en ce que la génération de signal de commande pour les moyens de commutation (19, 20, 21) pour la charge de la sortie de l'émetteur de repères d'allumage, est susceptible d'être commandée par un signal dépendant de la vitesse de rotation.

13. Installation d'allumage selon la revendication 12, caractérisée en ce qu'il est prévu un commutateur de vitesse de rotation (81) pour engendrer le signal dépendant de la vitesse de rotation.

14. Installation d'allumage selon la revendication 13, caractérisée en ce que le commutateur de vitesse de rotation (81) est essentiellement constitué d'un condensateur (72) avec un organe de charge et de décharge (71, 73), lequel est sollicité par une demi-onde des signaux d'émetteur (U10), les moyens de commutation (19, 20, 21) étant susceptibles d'être mis en circuit en fonction de la tension du condensateur.

15. Installation d'allumage selon la revendication 14, caractérisée en ce que les moyens de commutation sont susceptibles d'être mis en circuit par l'intermédiaire de l'organe temporisé (24).

# FIG.1

# FIG.5

FIG. 2

FIG.3

FIG.4

2

# FIG. 6

# FIG.7

FIG.8